(19) Europäisches Patentamt / European Patent Office / Office européen des brevets

(11) **EP 1 723 853 B1**

(12) **EUROPEAN PATENT SPECIFICATION**

(45) Date of publication and mention
of the grant of the patent:
**27.04.2011 Bulletin 2011/17**

(51) Int Cl.:
*A23L 1/0522* (2006.01)      *A23L 1/10* (2006.01)
*A21D 6/00* (2006.01)

(21) Application number: **06010271.2**

(22) Date of filing: **18.05.2006**

(54) **Flour composition with increased total dietary fiber, process of making, and uses thereof**

Mehlzusammensetzung mit erhöhtem Gesamtfasergehalt, Verfahren zu deren Herstellung und deren Verwendung

Composition de farine enrichie en fibre diététique totale, procédé pour sa préparation et son usage

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.05.2005 US 131589**

(43) Date of publication of application:
**22.11.2006 Bulletin 2006/47**

(73) Proprietor: **BRUNOB II B.V.**
**6824 BM Arnhem (NL)**

(72) Inventors:
• **Okoniewska, Monika K.**
**Princeton**
**New Jersey 08540 (US)**
• **Bindzus, Wolfgang**
**Hillsborough**
**New Jersey 08844 (US)**
• **Brown, Ian**
**Bymea Bay, NSW 2227 (AU)**
• **Skorge, Robert A.**
**Somerville**
**New Jersey 08876 (US)**

• **Shi, Yong-Cheng**
**Manhattan, KS, 66503 (US)**
• **Shah, Tarak J.**
**Union City**
**New Jersey 07087 (US)**

(74) Representative: **Held, Stephan et al**
**Meissner, Bolte & Partner GbR**
**Postfach 86 06 24**
**81633 München (DE)**

(56) References cited:
**EP-A- 1 088 832          WO-A-02/37955**
**US-A- 5 902 410          US-A1- 2003 113 429**
**US-A1- 2004 047 963     US-B1- 6 287 621**

• **HSI-MEI LAI: "Effects of hydrothermal treatment on the physicochemical properties of pregelatinized rice flour" FOOD CHEMISTRY, ELSEVIER SCIENCE PUBLISHERS LTD, GB, vol. 72, no. 4, 2001, pages 455-463, XP002392069 ISSN: 0308-8146**

## Description

The present invention relates to a flour composition with increased total dietary fiber, the process of making, and uses thereof.

BACKGROUND OF THE INVENTION

This invention relates to a process of making a flour composition with increased total dietary fiber, the resultant flour composition, and uses thereof. The flour is prepared by the selected short-time, hydrothermal treatment of high amylose flour. Further, the invention relates to the use of this high dietary fiber flour composition in food products.

Flour is a complex composition that typically contains starch, protein, fat (lipids), fiber, minerals and a variety of other possible components. The starch component is a complex carbohydrate composed of two types of polysaccharide molecules; amylose, a mostly linear and flexible polymer of D-anhydroglucose units that are linked by alpha-1,4-D-glucosidic bonds, and amylopectin, a branched polymer of linear chains that are linked by alpha-1,6-D-glucosidic bonds.

It is known that starch may be transformed via certain process operations into resistant starch, which has a high dietary fiber content and/or is resistant to pancreatic amylase. Such processing operations take significant time, cf. EP-A-1 088 832, typically on the order of at least one hour, to substantially increase the total dietary fiber. Research literature indicates that such starches have numerous beneficial effects, including colonic health and a reduced caloric value. In addition, the starches may provide reduced meal carbohydrates, reduced glycemic and insulimic responses, impact satiety and contribute to sustained energy release, weight management, control of hypoglycemia, hyperglycemia, impaired glucose regulation, insulin resistance syndrome, type II diabetes mellitus, and improved athletic performance, mental concentration and memory.

Surprisingly, it has now been discovered that high amylose flour may be processed by a short hydrothermal treatment to increase its total dietary fiber content and that such flour is useful in a variety of products.

SUMMARY OF THE INVENTION

High amylose flour may be processed by a short-time, hydrothermal treatment to increase its total dietary fiber (TDF) content. These flours may be prepared by heating a high amylose flour having at least 40% amylose content by weight of its starch at a total water content of from about 10 to 50% by weight at a temperature of from about 80 to 160°C, for about 0.5 to 15 minutes. This invention further relates to products which contain the high TDF flour, including food products.

As used herein, short-time is intended to mean a treatment of from 0.5 to 15 minutes at the target temperature.

As used herein, total water content is intended to mean the moisture (water) content of the flour as well as any water added during processing.

Total dietary fiber (TDF), as used herein, is intended to mean the dietary fiber content measured using the method described by the Association of Analytical Chemists (AOAC) method 991.43 (Journal of AOAC, Int., 1992, v. 75, No. 3, p.395-416,). Total dietary fiber is reported on a dry basis.

Flour, as used herein, is intended to mean, a multicomponent composition which includes starch and may include protein, fat (lipids), fiber, vitamins and/or minerals. Flour is intended to include, without limitation, meal, wholemeal, cone, masa, grits, and flaking grits, but is not intended to include pure starch.

As used herein, high amylose flour is intended to mean a flour containing at least about 27% amylose for wheat or rice flour and at least about 40% amylose for other sources, by weight of its starch as measured by the potentiometric method detailed in the Examples section.

Gelatinization, as used herein, is intended to mean the process by which starch is cooked out and loses its granular structure. Granular is intended to mean the structure of native starch in which the starch is not water soluble (still at least partly crystalline) and has birefringence and a typical Maltese cross under polarized light. In high amylose starches, some native granules do not exhibit a Maltese cross, particularly filamentous granules. During gelatinization, as used herein, starch loses its birefringent property as well as any Maltese cross present in its native state.

As used herein, heating time is the time at the target temperature and does not include heat-up (ramping) time.

As used herein, heat-up or ramping time is intended to mean the time required to heat the flour from room temperature to target temperature.

Target temperature, as used herein, is the temperature at which the flour is hydrothermally processed and begins when the flour reaches 80 °C.

Structural change, as used herein, is intended to mean change to any native structure of the flour components, and would include without limitation protein denaturation, starch annealing or crystallization, and formation of complexes or other interactions between the flour components.

As used herein, a food product is intended to include all edible products and includes beverages, for human and/or animal consumption.

Subpeak melting point temperature, as used herein, is intended to mean a melting point temperature (Tp) that, if the flour was hydrothermally processed for a longer time period, would substantially increase, by at least 5°C.

BRIEF DESCRIPTION OF THE DRAWINGS

Figure 1 depicts the melting profiles as measured by DSC for hydro-thermally processed high amylose corn flours of Example 2.
Figure 2 depicts the melting profiles as measured by DSC for hydro-thermally processed high amylose corn flours of Example 5.

DETAILED DESCRIPTION OF THE INVENTION

High amylose flour may be processed by a short-time hydrothermal treatment to increase its total dietary fiber (TDF) content. These flours may be prepared by heating a high amylose flour having at least 40% amylose content by weight of its starch at a total water content of from about 10 to 50% by weight at a temperature of from about 80 to 160°C, for about 0.5 to 15 minutes.

The flours used in preparing the present invention may be any high amylose flour derived from any native source. A native flour as used herein, is one as it is found in nature. Also suitable are flours derived from a plant obtained by standard breeding techniques including crossbreeding, translocation, inversion, transformation, insertion, irradiation, chemical or other induced mutation, or any other method of gene or chromosome engineering to include variations thereof. In addition, flour derived from a plant grown from induced mutations and variations of the above generic composition which may be produced by known standard methods of mutation breeding are also suitable herein.

Typical sources for the flours are cereals, tubers and roots, legumes and fruits. The native source can be any high amylose variety, including without limitation, sourced from of corn, potato, sweet potato, barley, wheat, rice, sago, amaranth, tapioca, arrowroot, canna, pea, banana, oat, rye, triticale, and sorghum. In one embodiment the flour is corn flour. As used herein, the term high amylose is intended to include a flour containing at least about 27% amylose for wheat or rice and at least about 40% amylose for other sources, each by weight of its starch. In one embodiment, the flour source contains at least about 50% amylose, in another embodiment at least about 70% amylose, in a third embodiment at least about 80% amylose, and in a fourth embodiment at least about 90% amylose, all by weight of its starch. As known in the art, the flour will comprise components other than starch. In one embodiment, the flour used comprises at least 5% protein, at least about 1% lipid, all by weight of the flour, and at least about 50% amylose by weight of the starch. In one embodiment, the flour used comprises at least 10% protein, at least about 3% lipid, all by weight of the flour, and at least about 70% amylose by weight of the starch. In yet another embodiment, a corn flour is used which comprises about 8 to 13% protein, about 2 to 3% lipid, and about 85 to 90% starch, all by weight of the flour. In one embodiment, the flour has a protein content of at least about 20% and in another embodiment at least about 40% by weight of the flour.

In another embodiment, the high amylose flour is extracted from a plant source having an amylose extender genotype (recessive or dominant). In another embodiment, the flour comprises starch containing less than 10% by weight amylopectin as determined by the butanol fractionation methodology. In yet another embodiment the flour is derived from a plant breeding population, particularly corn, which is a genetic composite of germplasm selections and comprises at least 75% by weight amylose, and in one case at least 85% amylose (i.e., normal amylose), less than 10%, by weight, and in another case less than 5%, amylopectin, and from about 8 to 25% low molecular weight amylose. In a further embodiment, the flour is extracted from the grain of a starch bearing plant having a recessive amylose extender genotype coupled with numerous amylose extender modifier genes. Such plant is known and described in the art.

The flour is obtained from the native source using methods known in the art for producing flour, for example by dry milling. Other possible methods include, without limitation, wet grinding and separation or a combination of dry and wet procedures. One skilled in the art understands that the components of the flour may be manipulated; for example, the protein content of flour may be increased by known techniques, such as fine grinding and air classification.

In preparing the flour of this invention it is necessary that the flour be processed for a specified time at a specified total water content and defined temperature and time combination so as to avoid or minimize partially or fully gelatinizing the starch component of the flour so that it substantially retains its granular structure. Partial gelatinization may occur but should be minimized to maintain the highest possible TDF. In one embodiment, there is no gelatinization. By treating the flour under these conditions, a flour having a high total dietary fiber content will be prepared.

The total water (moisture) content will be in a range of from about 10 to 50%, and in one embodiment in the range of from about 20 to 30% by weight based on the weight of the dry flour (dry solids basis). In one embodiment, this relative level of moisture is maintained substantially constant throughout the heating step. In another embodiment, no water is added to the flour during heating (i.e. no water is present during the heating step other than the moisture content of the flour). In another embodiment, the moisture content is not controlled (kept substantially constant) during the hydrothermal treatment such that the treated flour has a lower moisture content once processed.

The flour is heated at a target temperature of from about 80 to 160°C, and in one embodiment at a temperature of from about 100 to 120°C. While the most desirable temperature and water content may vary depending on the particular flour composition (including the source and amount of protein, starch, and lipid) and its amylose content, it is important to high total dietary fiber content that the starch remain in the granular state such that it does not lose its crystalline and birefringent characteristics.

The time of heating at the target temperature can vary depending on the flour used, its amylose content and particle size, the level of total dietary fiber content desired as well as the amount of moisture and the heating temperature. In one embodiment, such heating time will be from about 0.5 to 15 minutes. In one embodiment, the flour is heated

The heat-up (ramp) time may vary depending upon the equipment used, the process conditions, and the flour used. In one embodiment, it is desirable to have a short heat-up time to avoid color and adverse flavor formation in the resultant flour. In another embodiment, the heat-up time is less than about 5 minutes and in another less than about 1 minute.

The conditions for treating flour to obtain a high level of total dietary fiber are such that the granular structure of the starch is not destroyed (gelatinized) such that they remain crystalline and birefringent. Further, there would be no loss of any Maltese cross present in the native starch when the granular structure is viewed under polarized light. Under some conditions, such as at high moisture and high temperature, the starch granule may be partially swollen, but the crystallinity is not completely destroyed. Under these conditions, the starch granule has not been destroyed and an increase in total dietary fiber may still be obtained in accordance with this invention.

Although the crystallinity of the starch contributes to the total dietary fiber, the hydrothermal processing changes other components of the flour as well, which may include structural changes. In one aspect, the conditions of the hydrothermal processing are chosen to maximize the increase in total dietary fiber, yet minimize the undesirable heat-induced effects, such as reduced nutritional value (e.g. degradation of vitamins) or reduced organoleptic qualities (e.g. taste, color).

The heat treatment may be conducted in any equipment known in the art, which provides sufficient capabilities for powder processing, as well as moisture addition and control, mixing, heating and drying as desired. In one embodiment, the equipment is a continuous tubular thin film dryer. In another embodiment, the equipment is a combination of a continuous thin film dryer in series with a continuous heated conveyer screw, which may additionally be pressurized to control moisture content at the target temperature. In yet another embodiment, the equipment is a batch ploughshare mixer. The heat treatment may be done as a batch or as a continuous process.

In one embodiment, the heat treatment is conducted as a batch process and the flour is brought up to a temperature within the 80 to 160 °C range and held at a substantially constant temperature. In another embodiment, the heat treatment is conducted as a continuous process, with a short ramp up time. In one embodiment of the continuous process, the flour is up to a temperature within the 80 to 160 °C range and held at a substantially constant temperature and in another embodiment, the heat treatment is substantially complete by the time such temperature is reached.

The flour may additionally be processed either before or after the heat treatment process, as long as such process does not destroy the granular structure of the starch. In one embodiment, such additional processing may include degradation using alpha-amylase or acid treatment and in another, chemical modification.

The particle size of the flour may be adjusted, either before or after hydrothermal processing, for example by grinding, agglomerating, and/or sieving. However, it should be noted that grinding may reduce the total dietary fiber content of the flour. In one embodiment, the 90% of the hydrothermally treated flour has a particle size of at least 250 microns and no greater than 590 microns, and in another embodiment 90% of the hydrothermally treated flour has a particle size of at least 180 microns and no greater than 590 microns. In yet another embodiment, the hydrothermally treated flour has a particle size of no greater than 590 microns with 70% having a particle size of at least 180 microns and in a further embodiment the flour has a particle size of no greater than 590 microns with 80% having a particle size of at least 125 microns. In all cases, the particle size of the hydrothermally treated flour may be due to that of the flour before treatment or due to a change in particle size after treatment using methods known in the art. In one embodiment, the size after treatment is due to that of the flour before treatment.

The flour may be purified using any techniques known in the art. In one embodiment, the flour is bleached using methods known in the art to reduce color. The pH of the flour may also be adjusted using methods known in the art.

The flour may be dried using any drying means known in the art which will not gelatinize its starch. In one embodiment, the flour is air dried and in another it is flash dried.

The pre- and/or post- processing methods used may further control the total dietary fiber content or otherwise make the flour more desirable for use in foods.

The resulting flour product which has been hydrothermally treated will contain starch which has retained its granular structure as evidenced by its birefringent characteristic when viewed under the microscope and by no loss of any Maltese cross present in the native starch when viewed under polarized light. The flour will have a total dietary fiber content of at least about 20% and at least 10% (absolute based on the weight of the flour) higher than that of the flour prior to hydrothermal treatment. In one embodiment, the flour will have a total dietary fiber content of at least about 40%, in another embodiment at least about 50%, and in yet another embodiment at least about 60% by weight. The level of dietary fiber of the flour will vary depending on the conditions used for heat treatment as well as the particular starting material.

The resultant flour will also have a subpeak melting point temperature [Tp] (as measured by DSC using the method detailed in the Examples section) such that, if the flour was hydrothermally processed for a longer time period, Tp would substantially increase, by at least 5°C. The melting point temperature is dependent upon the source and composition of the initial flour as well as the treatment conditions. A lower melting point temperature is desirable in many cases as it would be indicative of a flour which would cook out more easily and have a higher level of water absorption. In one embodiment, the flour is derived from corn having an amylose content of at least about 70% amylose by weight and the melting point temperature of the hydrothermally treated flour is at least about 100 °C.

The resultant flour has an acceptable color with no or minimized deviation from the native flour. In one embodiment, the change in L-value, which expresses whiteness on a scale from 0 to 100, between the native flour and the hydrothermally treated flour is less than 10. In another embodiment, the change in L-value is less than 5 and in another embodiment the change in L-value is less than 2.

The resultant flour has a high process tolerance in that it does not easily lose its TDF content under high heat and/or shear as does starch treated in a similar manner. This makes the flour of the present invention useful for increasing the TDF content of a variety of products in which high TDF starches are not as functional. In one embodiment, flour has 20% higher TDF retention than starch under the same heat and shear processing conditions.

In one embodiment, the flour has a high process tolerance when extruded. Extrusion may be conducted using any suitable equipment and process parameters known in the art. Since a large number of combinations of process parameters exist, e.g., product moisture, screw design and speed, feed rate, barrel temperature, die design, formula and length/diameter (Ud) ratios, Specific Mechanical Energy (SME) and Product Temperature (PT) have been used in the art to describe the process parameter window of the extrusion. In one embodiment, the flour retains at least about 50% of its total dietary fiber when exposed to an SME of at least about 125 Wh/kg and a PT of 135-145°C, and in another embodiment at least about 60% of its total dietary fiber, by weight.

The flour of this invention may be used in any food product. The flour will contribute to the total dietary fiber and lower the caloric content of such food product. Typical food products include, but are not limited to, cereals such as ready-to-eat, puffed or expanded cereals and cereals which are cooked before eating; baked goods such as breads, crackers, cookies, cakes, muffins, rolls, pastries and other grain-based ingredients; pasta; beverages; fried and coated foods; snacks; and cultured dairy products such as yogurts, cheeses, and sour creams.

The amount of dietary fiber which can be added and used in any given food will be determined to a great extent by the amount that can be tolerated from a functional standpoint. In other words, the amount of high TDF flour used generally may be up to what is acceptable in organoleptic evaluation of the food. In one embodiment, the flour of this invention is used in an amount of about 0.1 to 90%, by weight of the food and in another embodiment, from about 1 to 50%, and in yet another embodiment, from about 1-25%, by weight of the food.

The flours of this invention may also be used in a pharmaceutical or nutritional product, including but not limited to prebiotic and probiotic compositions, diabetic foods and supplements, dietetic foods, foods to control glycemic response, and tablets and other pharmaceutical dosage forms.

The products made using the flours of this invention may be fed to (ingested by) any animal and in one embodiment to mammals.

The following embodiments are presented to further illustrate and explain the present invention and should not be taken as limiting in any regard.

1. A process of increasing the total dietary fiber of a flour comprising heating the flour under the conditions of a moisture content of between from 10 to 50% by weight of the flour, at a target temperature of from 80 to 160°C, and a time of 0.5 to 15 minutes at the target temperature to produce a hydrothermally heated flour;
wherein the flour has an amylose content of at least 40% by weight of starch in the flour or, if wheat or rice flour an amylose content of at least 27% by weight of starch in the flour;
wherein the conditions are chosen to increase the total dietary fiber by at least 10% based on the weight of the flour.
2. The process of embodiment 1, wherein the flour is a corn flour.
3. The process of embodiment 1, wherein the flour has an amylose content of at least about 70% by weight of the starch in the flour.
4. The process of embodiment 1, wherein the flour has an amylose content of at least about 80% by weight of the starch in the flour.

5. The process of embodiment 1, wherein the flour has an amylose content of at least about 90% by weight of the starch in the flour.

6. The process of embodiment 1, wherein the flour comprises at least 5% protein and at least about 1% lipid both by weight of the flour, and at least about 50% amylose by weight of the starch in the flour.

7. The process of embodiment 1, wherein the flour is a corn flour which comprises about 8 to 13% protein and about 2 to 3% lipid, and about 85 to 90% starch, all by weight of the flour.

8. The process of embodiment 1, wherein the target temperature is between 100 and 120 °C.

9. The process of embodiment 1, wherein the moisture content is between from 20 to 30% by weight of the flour.

10. The process of embodiment 1, wherein the heating is carried out without the addition of water.

11. The process of embodiment 1, wherein the moisture content is not controlled during heating.

12. A composition comprising the hydrothermally heated flour of embodiment 1.

13. The composition of embodiment 12, wherein the flour has a total dietary fiber content of at least 20% by weight of the flour.

14. The composition of embodiment 12, wherein the flour has a total dietary fiber content of at least 40% by weight of the flour.

15. The composition of embodiment 12, wherein the flour has a total dietary fiber content of at least 50% by weight of the flour.

16. The composition of embodiment 12, wherein the flour has a subpeak melting point temperature.

17. The composition of embodiment 12, wherein the flour is a corn flour having an amylose content of at least 70% by weight of the starch in the flour and a melting point temperature of at least 100°C.

18. The composition of embodiment 12, wherein the flour has a change in L-value of less than 10.

19. The composition of embodiment 12, wherein the flour has a change in L-value of less than 2.

20. The composition of embodiment 12, wherein 90% of the flour has a particle size of at least 250 microns and no greater than 590 microns.

21. The composition of embodiment 12, wherein 90% of the flour has a particle size of at least 180 microns and no greater than 590 microns.

22. The composition of embodiment 12, wherein the flour has a particle size of no greater than 590 microns and 70% of the flour has a particle size of at least 180 microns.

23. The composition of embodiment 12, wherein the flour has a particle size of no greater than 590 microns and 80% of the flour has a particle size of at least 125 microns.

24. A method of producing a food comprising:

extruding the composition of embodiment 13 using an SME of at least 125 Wh/kg and a PT of 135-145°C to form an extruded composition,
wherein the extruded composition retains at least about 50% by weight of its total dietary fiber content.

25. The method of embodiment 24, wherein the extruded composition retains at least about 60% by weight of its total dietary fiber content.

EXAMPLES

The following examples are presented to further illustrate and explain the present invention and should not be taken as limiting in any regard. All parts and percentages are given by weight and all temperatures in degrees Celsius (°C) unless otherwise noted.

The following test procedures were used throughout the examples.

A. Amylose Content Determination

Potentiometric Determination of Amylose Content

Approximately 0.5g of a starch (obtained from 1.0g of ground grain) sample was heated in 10 ml of concentrated calcium chloride (about 30% by weight) to 95 °C for 30 min. The sample was cooled to room temperature, diluted with 5ml of 2.5% uranyl acetate solution, mixed well, and centrifuged for 5min at 2000 rpm. The sample was then filtered to give a clear solution. The starch concentration was determined polarimetrically, using 1 cm polarimetric cell. An aliquot of the sample (normally 5ml) was then directly titrated with a standardized 0.01 N iodine solution while recording the potential using a platinum electrode with a KCl reference electrode. The amount of iodine needed to reach the inflection point was measured directly as bound iodine. The amount of amylose was calculated by assuming 1.0gram of amylose will bind with 200 milligrams of iodine.

B. Total Dietary Fiber Determination

The following procedure outlines the determination of total dietary fiber content using AOAC method 991.43 (Journal of AOAC, Int., 1992, v. 75, No. 3, p.395-416).

The test is performed using Megazyme AOAC 991.43 TDF method kit, K-TDFR.

Procedure for determination of insoluble dietary fiber:

1. Blanks

With each assay, run two blanks along with samples to measure any contribution from reagents to residue.

2. Samples

   a. Weigh duplicate 1.000±0.005 g samples accurately into 400ml tall-form beakers.
   b. Add 40 ml 0.05M MES-TRIS blend buffer solution (pH 8.2) to each beaker. Add magnetic stirring bar to each beaker. Stir on magnetic stirrer until sample is completely dispersed in solution.

3. Incubation with heat-stable α-amylase

   a. Add 50 μl heat-stable α -amylase solution, while stirring at low speed.
   b. Cover each beaker with aluminum foil squares.
   c. Place covered samples in shaking water bath at 95-100°C, and incubate for 35 min with continuous agitation. Start timing once all beakers are in hot water bath.

4. Cool.

   a. Remove all sample beakers from hot water bath and cool to 60°C.
   b. Remove foil covers.
   c. Scrape any ring around beaker and gels in bottom of beaker with spatula, if necessary.
   d. Rinse side wall of beaker and spatula with 10 ml distilled water by using pipette.
   e. Adjust temperature of water bath to 60°C.

5. Incubation with protease

   a. Add 100 μl protease solution to each sample.
   b. Cover with aluminum foil.
   c. Incubate in shaking water bath at 60±1°C, with continuous agitation for 30 min. Start timing when temperature of water bath reaches 60°C.

6. pH adjustment

   a. Remove sample beakers from shaking water bath.
   b. Remove covers.
   c. Dispense 5 ml of 0.561 N HCl solution into sample while stirring on magnetic stirrer.
   d. Check pH, which should be 4.1- 4.8. Adjust pH, if necessary, with additional 5% NaOH solution or 5% HCl solution.

7. Incubation with amyloglucosidase

   a. Add 200 μl amyloglucosidase solution while stirring on magnetic stirrer.
   b. Replace aluminum cover.
   c. Incubate in shaking water bath at 60°C for 30 min, with constant agitation. Start timing when temperature of water bath reaches 60°C.

8. Filtration setup

   a. Tare crucible containing Celite to nearest 0.1 mg.
   b. Wet and redistribute bed of Celite in crucible using approximately 3 ml distilled water.
   c. Apply suction to crucible to draw Celite onto fritted glass as even mat.

9. Filter enzyme mixture from Step 7 through crucible into a filtration flask.

10. Wash residue twice with 10 ml distilled water preheated to 70°C. Use water to rinse beaker before washing residue in crucible. Transfer solution to a pre-tared 600 ml tall-form beaker.

11. Wash residue twice with 10 ml of:

   a. 95% ethanol
   b. Acetone

12. Dry crucible containing residue overnight in 103°C oven.

13. Cool crucible in desiccator for approximately 1 hr. Weigh crucible containing dietary fiber residue and Celite to nearest 0.1 mg. To obtain residue weight, subtract tare weight, i.e., weight of dried crucible and Celite.

14. Protein and ash determination.

One residue from each type of fiber is analyzed for protein, and the second residue of the duplicate is analyzed for ash.

   a. Perform protein analysis on residue using Kjeldahl method (AACC 46-10). Use 6.25 factor for all cases to calculate grams of protein.
   b. For ash analysis, incinerate the second residue for 5 hr at 525°C as described in AACC method 08-01. Cool in desiccator and weigh to nearest 0.1 mg. Subtract crucible and Celite weight to determine ash.

Total dietary fiber is calculated according to the formula presented below and is reported on dry basis unless indicated otherwise.

$$TDF\ (\%) =\ [(R1-R2)/2 - P - A - blank] / (m1+m2)/2 \times 100$$

Where:

m1- sample weight 1
m2- sample weight 2
R1-residue weight from m1
R2- residue weight from m 2
A- ash weight from R1
P- protein weight from R2

C. Thermal analysis by DSC

Thermal analysis of the native and hydro-thermally treated flours was performed using a Perkin Elmer Differential Scanning Calorimeter 7 with liquid nitrogen cooling accessory. 10 mg of anhydrous sample was weighed into a stainless steel hermetic pan and water was added to obtain 3:1 water to flour ratio. The pan was sealed and scanned from 10-160°C at 10°C/min heating rate. The samples were run in duplicates and the average values of onset, peak and end melting temperatures (°C) and gelatinization enthalpy values (J/g) are reported.

D. Color measurement

The color measurement was done using a Hunter Color Quest II spectrocolorimeter sphere model (Hunter Associates laboratory, Inc. Reston, VA, USA). L - and a - values were measured and calculated according to the procedures and software model specified for the use of the equipment. The L - value measures the lightness of a product and varies from 100 for perfect white to 0 for black. The a - value measures redness when positive.

Example 1 - High amylose corn flour with high TDF produced via hydrothermal treatment at short processing time: Relationship between processing time and

TDF development

High amylose corn grain was used to produce degerminated high amylose corn flour via conventional dry milling. The dry milling process followed the typical description as outlined in the art and included grain cleaning, degermination followed by germ and bran separation and final steps of milling and sifting to obtain the target particle size. The composition had the following characteristics: 13.6 % moisture, 10.2 % protein, 1.8 % ash and 6.0 % fat. The particle size distribution was as follows: 55.3 % on a 250 micron sieve, 18.3 % on a 177 micron sieve, 17.5 % on a 125 micron sieve and 8.9 % thru a 125 micron sieve. The TDF of the high amylose corn flour was 31 %.

The dry milled high amylose corn flour was hydro-thermally treated using a batch process ploughshare mixer and dryer (Model: 300HP Prestovac reactor manufactured by Processall, Cincinnati, OH, USA). The following conditions were used. Batch A: High amylose corn flour was transferred into the reactor at room temperature. The moisture content of the high amylose corn flour was adjusted from 13.6 to 30 % moisture (+/- 1 %). The moisture adjusted high amylose corn flour was heated to 121 °C (250 °F). The heat up to 121 °C took about 45 min. Samples were taken right after the target temperature was reached (specified as "1 min at target temperature") as well as after 30, 60 and 120 min at target temperature. The samples were analyzed in duplicates for total dietary fiber (TDF) using AOAC 991.43 method. A second batch (batch B) was produced and analyzed using the same process and procedures but different settings for moisture content (25 %) and target temperature 126 °C (260 °F). Table 1 shows the processing time at target temperature and the TDF data.

Table 1: TDF data for hydro-thermally treated high amylose corn flour

| Processing Time (min) | Batch A Series | TDF% | Batch B Series | TDF% |
|---|---|---|---|---|
| 1 | A-1 | 63 | B-1 | 61 |
| 30 | A-30 | 64 | B-30 | 67 |
| 60 | A-60 | 65 | B-60 | 67 |
| 120 | A-120 | 62 | B-120 | 65 |

The data in Table 1 show that the TDF of high amylose corn flour increased from 31 % for the untreated flour to 63 % (Sample A) and 61 % (Sample B) once the process reached the respective target temperatures of 121 and 126 °C. Upon holding at the target temperatures, no significant increase in TDF was observed for Samples A and B. The results show that the TDF developed very fast and reached a maximum soon after the target temperatures were reached. This result suggests a faster mechanism for TDF development than typically seen for high amylose starches.

Example 2 - Effect of process conditions on melting characteristics of hydrothermally treated high amylose corn flour and correlation to TDF development

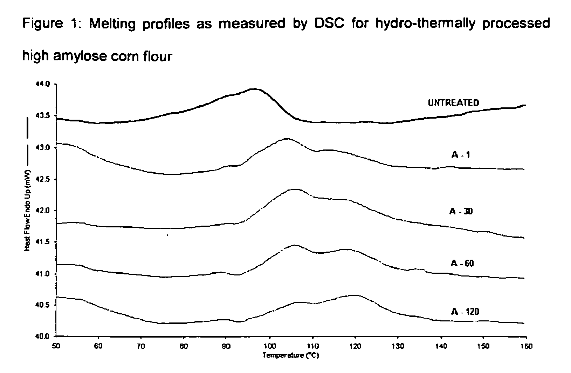

The "Sample A Series" from Example 1 as well as the untreated high amylose corn flour were characterized by DSC analysis to determine changes in melting behavior. The analytical procedure is described above. Table 2 summarizes the TDF data as well as the data that describe the melting behavior of the compositions. Further, the melting profiles are shown in Figure 1. The data show that the onset temperature (To), the peak temperature (Tp) and the end temperature (Tc) increased with longer processing time. For To, the most significant increase was observed between the untreated flour and the 1 min at target temperature sample. For Tp, the most significant increases were observed for the "1 min at target temperature sample" (Sample A-1) and the change from 60 to 120 min. For Tc the most significant changes were observed for the "1 min at target temperature sample" and the change from 30 to 60 min. The shift in melting profile towards higher temperatures with longer processing time is also illustrated in Figure 1. The TDF data show that, as discussed in Example 1, the maximum TDF level was already obtained once the process reached the target temperature (Sample A-1). Since the melting temperature data for Sample A-1 do not show it's highest level for this sample series, the data proof that the TDF development on hydrothermally treated high amylose corn flour, treated via short time process, is not only dependent upon a process — induced change in melting characteristics or starch crystallinity. This suggests that other mechanisms like process - induced protein denaturating or other complex structural changes impact the development of TDF in hydrothermally treated flours. It is also important to note that the increase in melting temperature observed for the samples treated with longer processing time did not result in a further increase in TDF.

Table 2: Melting data measured via DSC for hydrothermally processed high amylose corn flour

| Sample | TDF | To | Tp | Tc | Delta H |
|---|---|---|---|---|---|
|  | (%) | (°C) | (°C) | (°C) | (J/g) |
| Untreated | 31 | 73.5 | 96.0 | 105.9 | 6.47 |
| A-1 | 63 | 91.0 | 103.7 | 117.3 | 6.93 |

(continued)

| Sample | TDF | To | Tp | Tc | Delta H |
|---|---|---|---|---|---|
| | (%) | (°C) | (°C) | (°C) | (J/g) |
| A-30 | 64 | 93.8 | 105.7 | 120.7 | 7.09 |
| A-60 | 65 | 94.7 | 105.7 | 130.8 | 6.83 |
| A-120 | 62 | 94.1 | 119.4 | 132.6 | 7.69 |

Example 3 - Effect of process conditions on color development in hydrothermally treated high amylose corn flour

The "Sample A Series" described in Examples 1 and 2 as well as the untreated high amylose corn flour were analyzed by color using a Hunter Color Quest II spectrocolorimeter sphere model (Hunter Associates laboratory, Inc. Reston, VA, USA). The procedure measured the L- and the a - values. The L — value describes lightness on a scale from 0 to 100. A reduction in L — value expresses reduced lightness. The a — value, when positive, describes an increase in redness. The two values were used to describe an increase in browning that was observed for hydrothermally treated yellow high amylose corn flour. Table 3 shows the processing time, the color data and the TDF data for the native flour as well as for the hydrothermally treated samples. The color data show reduced lightness (L-value) and increased redness (a-value) with longer processing time. This result expresses significant discoloration or color change during processing. The data also show that the short time process produces a flour with maximum TDF at the lowest level of discoloration. This is an additional benefit for the use of the composition in foods.

Table 3: TDF and color data for native and hydrothermally treated high amylose corn flour

| Processing Time | TDF | L - value | a - value |
|---|---|---|---|
| (min) | (%) | (-) | (-) |
| Untreated Flour | 31 | 83.6 | 2.33 |
| 1 | 63 | 80.6 | 2.74 |
| 30 | 64 | 74.4 | 4.90 |
| 60 | 65 | 71.7 | 5.99 |
| 120 | 62 | 71.2 | 5.28 |

Example 4 - High amylose corn flour with increased TDF produced via hydothermal treatment at short processing time and fast heat-up in a continuous system

The high amylose corn flour described in Example 1 was hydrothermally treated using a continuous short — time process. The continuous process design was composed of a jacket heated thin film dryer (Solidaire, Model SJS 8-4, Hosokawa-Bepex, MN, USA) in series with a jacket heated conveyer screw (Thermascrew, Model TJ-81 K3308, Hosokawa-Bepex, MN, USA). The system was designed to operate under moderate pressure. Double knife gate valves were used to maintain the system pressure while feeding and discharging the high amylose corn flour. The thin film dryer was used to heat the high amylose corn flour to respective target temperatures. The residence time in the thin film dryer was calculated to be about 1 min. The heated conveyer screw was used to control the heat — moisture treatment time. The residence time was adjusted by screw speed. Prior to the hydrothermal treatment, the high amylose corn flour was adjusted to a moisture content of 25 % (+/-1%) using a batch ribbon blender. The moisture adjusted high amylose corn flour was fed into the pressurized system at about 50 kg/h. Saturated steam was fed into the system at a steam temperature equivalent to the target temperature of the product. This was done to maintain a moisture of at least 25 % in the product during processing. A temperature probe was position at the product transfer from the thin film dryer to the conveyer screw. The high amylose corn flour was processed at the conditions reported in Table 4.
The samples were analyzed by TDF. The TDF data are shown in Table 4.

Table 4: TDF data for high amylose corn flour hydrothermally treated via short time continuous process

| Sample | Temperature (°C) | Time (min) at target temperature | TDF (%) |
|---|---|---|---|
| C | 100 | 15 | 54 |

(continued)

| Sample | Temperature (°C) | Time (min) at target temperature | TDF (%) |
|---|---|---|---|
| D | 120 | 5 | 62 |
| E | 130 | 15 | 60 |

The data in Table 2 show that the short time treatment increased the TDF of high amylose corn flour from 31% for the untreated flour to 54 - 62 % for the hydrothermally treated products.

Example 5 - Effect of process conditions on melting characteristics of hydrothermally treated high amylose corn flour and correlation to TDF

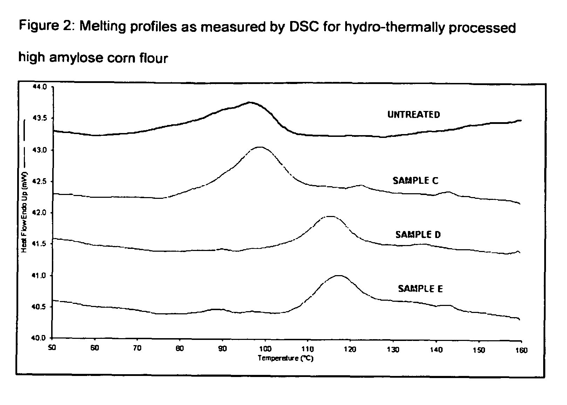

The samples described in Example 4 were characterized by DSC analysis to determine changes in melting behavior. Table 5 summarizes the TDF data as well as the data that describe the melting behavior of the compositions. Further, the melting profiles are shown in Figure 2. The data show that the hydrothermal treatment for 15 min at 100°C created compositions that, when compared to the untreated flour, had a significantly higher TDF and a melting behavior with a To increase from 73.5 to 85.2 °C, a delta H increase from 6.47 to 8.40 J/g and only slight increases in Tp and Tc. The short term hydrothermal treatment at higher temperature further increased the TDF and shifted the melting temperature to higher levels. It is important to note that the melting profile was found to be very narrow. In addition, the drop in delta H for sample D suggests that partial gelatinization may have occurred under the process conditions used. This set of data shows that partial or a low level of gelatinization did not prevent high TDF in the flour via described process.
Further, a comparison of Sample A-1 from Example 1 and Sample D from Example 4 shows that, although the products were both produced via a short time process at the same target temperature (120 - 121 °C) and have the same TDF level (61 to 63 %), the products show different melting profiles. This suggests that the heat-up time has an impact on the composition and, subsequently, it's performance in foods.

Table 5: Melting data measured via DSC for hydrothermally treated high amylose corn flour processed via short time continuous process

| Sample | TDF | To | Tp | Tc | Delta H |
|---|---|---|---|---|---|
| | (%) | (°C) | (°C) | (°C) | (J/g) |
| Untreated | 31 | 73.5 | 96.0 | 105.9 | 6.47 |
| C | 54 | 85.2 | 97.9 | 109.2 | 8.40 |
| D | 62 | 105.4 | 115.1 | 123.9 | 4.73 |
| E | 60 | 107.3 | 117.4 | 127.5 | 6.10 |

Example 6 - Effect of process conditions on color development for hydrothermally treated high amylose corn flour and correlation to TDF

The analytical method described in Example 3 was used to measure the color of the high amylose corn flour samples produced via continuous short time hydrothermal treatment as described in Example 4. The data are summarized in Table 6. It can be seen that the continuous short time process produced high amylose corn flour with increased TDF and very little (Sample D and E) or almost no color deviation (Sample C) from the untreated flour.

Table 6: Color data for hydrothermally treated high amylose corn flour produced via short time continuous process

| Sample | TDF | L-value | a-value |
|---|---|---|---|
| Untreated | 31 | 83.62 | 2.33 |
| C | 54 | 82.82 | 1.00 |
| D | 62 | 79.16 | 1.78 |
| E | 60 | 77.38 | 2.86 |

Example 7 - Effect of particle size reduction (post - processing) on the TDF of high amylose corn flour produced via short time heat - moisture treatment

The native high amylose corn flour that is described in Example 1 was hydrothermally treated using the short time continuous process described in Example 4. The high amylose corn flour was treated at 25 % moisture for 15 min at 100°C (Sample F). After the hydrothermal treatment, Sample F had the following particle size distribution: 22.8 % on 250 micron sieve, 45.1 % on a 180 micron sieve, 10.5 % on a 125 micron sieve and 21.6 % thru a 125 micron sieve. Sample F was ground to a fine particle size using an air classifier mill. The ground product, Sample G, had a particle size range from 53 to 32 microns (determined as 100 % thru a 53 micron screen and 100 % on a 32 micron screen). Table 7 shows the TDF for Samples F and G. The data show that the post processing step resulted in a reduction in TDF from 48 to 42 %. However, the TDF level of 42 % for the fine flour (Sample G) is still higher than the TDF of the native untreated flour (31 %). The result indicates that the grinding action may have destroyed part of the protective structure that was created through the hydrothermal treatment. Since such behavior is not known for heat — moisture treated purified starch, the result gives another indication for the more complex process — induced structural changes that constitute TDF in hydrothermally processed high amylose corn flour.

Table 7: TDF of hydrothermally treated high amylose corn flour and its fine ground product

| Sample | TDF | Particle Size in Microns | | | | |
|---|---|---|---|---|---|---|
| | (%) | > 250 | < 250 > 180 | < 180 > 125 | < 125 | < 53 > 32 |
| Untreated flour | 31 | | | | | |
| Sample F | 48 | 22.8% | 45.1% | 10.5% | 21.6% | - |
| Sample G | 42 | - | - | - | - | 100% |

Example 8 - Short time hydrothermal treatment of high amylose corn flour with and without moisture control

The process described in Example 4 was used to heat treat the high amylose corn flour that is described in Example 1 under atmospheric conditions. The high amylose corn flour was adjusted to a moisture of 25 % and heat treated under atmospheric conditions for 15 min at a target temperature of 100 C (Sample H). The time temperature profile was equivalent to the conditions used for Sample C in Example 4. Since such an atmospheric process design does not control the moisture in the product, and the process resulted in significant moisture reduction in the flour (drying). As the result, the flour dried from a starting moisture of 25 % to a moisture of 11 %. Table 8 shows the TDF and moisture data for Sample H in comparison to the data for Sample C. Although the TDF for Sample H did not reach the level of Sample C, the increase in TDF from 31 % for the untreated high amylose corn flour to 48 % is significant. This is a surprising finding since it suggests that it is not needed to control the moisture during the process, as specified for heat — moisture treatments, in order to produce a high amylose corn flour composition with significantly increased TDF.

Table 8: TDF data for high amylose corn flour hydrothermally treated with and without moisture control

| Sample | TDF (%) | Moisture (%) | |
|---|---|---|---|
| | | Before heat treatment | After heat treatment |
| Sample C | 54 | 25 | 27 |
| Sample H | 48 | 25 | 11 |
| Untreated flour | 31 | - | - |

Example 9 - Hydrothermal short time processing of high amylose corn flour and high amylose corn starch

High amylose corn starch, having a TDF of 18 %, was adjusted to a moisture of 30 % and heat treated using a thin film dryer (Turbo Dryer, VOMM, Italy). This equipment design is very similar to the equipment used in Example #4 (Solidaire, Hosokawa-Bepex, MN, USA). As described for the process in Example 8, the heat treatment was performed at atmospheric conditions. Therefore, the moisture was not controlled and the starch dried during the process. The moisture adjusted high amylose corn starch was heat treated at a temperature of 100 - 103 °C with a residence time of about 8 min (Sample K1). With the aim to extend the treatment time, the processed starch was re-adjusted to a moisture of 30 % and exposed to the same process conditions for a second time (Sample K2). Table 9 shows the TDF data for Samples K1 and K2 in comparison to Sample H from Example 8. As described in Example 8, Sample H, prepared from high amylose corn flour, was processed at a lower starting moisture (25%) and the same temperature level (100°C).

Table 9: TDF data for heat treated high amylose corn flour and high amylose corn starch

| Sample | TDF | Moisture (%) | |
|---|---|---|---|
| | | Before processing | After processing |
| Sample H | 48 | 25 | 11 |
| Sample K1 | 19 | 30 | 8 |
| Sample K2 | 19 | 30 | 8 |

The data in Table 9 show that the short time heat treatment at 100 °C did not increase the TDF of high amylose corn starch. In contrast, the same heat treatment conditions resulted in a significant increase in TDF when high amylose corn flour was used. As discussed earlier, the TDF increased from 31 to 48 %. This is another indication that the TDF development in flour is based on mechanisms that may include more than the annealing process in starch granules.

Example 10 - The use of hydrothermally treated high amylose corn flour in an extruded breakfast cereal formulation

The hydro-thermally treated flour was evaluated in expanded breakfast cereal to examine its performance in food application representing a process with significant heat and shear component. A new sample (B5) was prepared for the application trial according to the process described in Example 1. Flour used as a starting material for the hydro-thermal processing contained 10.7% moisture, 9.7% protein, 2.2% fat, 0.65% ash and had TDF of 28%. The final TDF of the hydro-thermally treated flour (sample B5) was 49%. The extrusion processing was performed using three barrel Wenger twin screw extruder model TX 57 to prepare expanded breakfast cereal. Dry blends of ingredients were prepared according to a formula listed in Table 10. Experimental samples were used to replace degermed corn flour in the formula to achieve 5g of fiber per 30 g serving of cereal (17%) which corresponds to a 'high fiber source' label claim. Three formulations were evaluated: 1) a control composition, 2) a composition containing the hydro-thermally treated flour (B5) with a starting TDF of 49% where the flour was included at 39% (wb) replacement and 3) a composition containing heat-moisture treated high amylose corn starch with a starting TDF of 64% where the starch was included at 30% (wb). The formulations for all three samples are presented in Table 10.

Table 10. Expanded Cereal Formulas.

| Ingredient | Sample 1 | Sample 2 | Sample 3 |
|---|---|---|---|
| | Use Level (% wb) | | |
| Degermed corn flour | 42 | 3 | 12 |
| Hydro-Thermally Processed Flour | 0 | 39 | 0 |
| Heat-Moisture Treated Starch | 0 | 0 | 30 |
| Hard winter wheat flour | 30 | 30 | 30 |
| Whole oat flour | 20 | 20 | 20 |
| Sugar | 6 | 6 | 6 |
| Salt | 2 | 2 | 2 |

Dry materials were blended in the ribbon mixer, Wenger Manufacturing, Inc., model No. 61001-000 for 30min, fed into a hoper and extruded without preconditioning. The feed rate was 100kg/hr. For the 3 barrel extruder design used, the barrel temperature profile was set to 50°C, 80°C, and 92°C and was maintained within four degree range. Specific Mechanical Energy (SME) was calculated according to a formula presented below to serve as an indicator of the mechanical shear input to the process.

$$\frac{Torque_{Actual}/Torque_{Max} \text{ x Screw Speed}_{Actual}/ \text{ Screw Speed}_{Max} \text{ x Engine Power Constant}}{\text{Throughput Rate}}$$

Selected extrusion conditions are summarized in Table 11. From the extruder, expanded samples were sent to a drier. Drier temperature was set in a first zone to 130°C, and in second and third zones to 30°C. Total retention time was approximately 8 min. At the exit of the drier, products were collected into lined boxes and packaged to minimize atmospheric moisture pick up. TDF of the dry blends and final products was determined using AOAC 991.43 method. TDF retention was calculated according to the formula:

$$\text{TDF Retention (\%)} = (TDF_{sample} \text{ x100}) / TDF_{Dry\ Blend}$$

TDF of dry blends for sample 2 and 3 was 22% (wb) and for a control it was 5% (wb).

Table 11. Breakfast cereal processing conditions and final properties.

| Sample Number | Process | | | Final Product | | |
|---|---|---|---|---|---|---|
| | Moisture in Extruder (%) | Screw Speed (rpm) | SME (Wh/kg) | Moisture (%) | TDF (% wb) | TDF Retention (%) |
| 1 | 16.0 | 400 | 124 | 2.87 | 5 | Na |
| 2 | 16.0 | 400 | 125 | 2.48 | 12 | 61 |
| 3 | 15.9 | 400 | 125 | 2.04 | 7 | 41 |
| na - not applicable | | | | | | |

Product temperature range was 135-145°C

The results presented in Table 11 demonstrate that under the same extrusion conditions, as defined by the settings of the process parameters screw speed, barrel temperature profile and water content of the formula in the extruder as well as by the resulting SME, hydro-thermally treated flour results in higher TDF retention than heat-moisture treated starch. The flour represents an ingredient of choice for formulation of extruded breakfast cereal with increased fiber content. The results demonstrate that at least 60% TDF is retained by hydro-thermally processed flour in high shear and temperature application such as extrusion of expanded cereal where moisture content in extruder is 16%, SME is about 125Wh/kg and product temperature does not exceed 145 °C. In the same conditions, heat moisture treated starch, retains only 41% TDF.

Example 11 - Hydrothermal treatment of high amylose corn flour in a continuous process at different processing times.

High amylose corn flour, as described in Example 1, was hydrothermally processed in a continuous operation using the process described in Example 4. The high amylose corn flour was adjusted to a moisture content of 25 % (+/-1 %) using a batch Ribbon blender. The moisture adjusted flour was heat treated at a target temperature of 120 °C for 5 min (Sample D from Example 4), 15 min (Sample L) and 30 min (Sample N). Table 12 shows process conditions, TDF and color data. It can be seen that the maximum TDF was obtained at a short processing time of 5 min. The decline in TDF at longer processing time may be due to partial loss of granular integrity. Further, the extension of the processing time to 30 min resulted in significant and undesirable product discoloration as expressed via decrease in L-value and increase in a-value.

Table 12: TDF and Color data for hydrothermally processed high amylose corn flour.

| Sample | Processing Time (min) | TDF (%) | Color measurement | |
|---|---|---|---|---|
| | | | L - Value | A - value |
| Untreated Flour | - | 31 | 83.62 | 2.33 |
| Sample D | 5 | 62 | 79.16 | 1.78 |

(continued)

| Sample | Processing Time (min) | TDF (%) | Color measurement | |
|---|---|---|---|---|
| | | | L - Value | A - value |
| Sample L | 15 | 54 | 74.91 | 3.73 |
| Sample N | 30 | 55 | 69.82 | 5.93 |

**Claims**

1. A process of increasing the total dietary fiber of a flour comprising heating the flour under the conditions of a moisture content of between from 10 to 50% by weight of the flour, at a target temperature of from 80 to 160°C, and a time of 0.5 to 15 minutes at the target temperature to produce a hydrothermally heated flour;
   wherein the flour has an amylose content of at least 40% by weight of starch in the flour or, if wheat or rice flour an amylose content of at least 27% by weight of starch in the flour;
   wherein the conditions are chosen to increase the total dietary fiber by at least 10% based on the weight of the flour.

2. The process of claim 1, wherein the flour is a com flour.

3. The process of claim 1 or 2, wherein the flour has an amylose content of at least about 70% by weight of the starch in the flour.

4. The process of claim 3, wherein the flour has an amylose content of at least about 80% by weight of the starch in the flour.

5. The process of claim 4, wherein the flour has an amylose content of at least about 90% by weight of the starch in the flour.

6. The process of any one of claims 1-5, wherein the flour comprises at least 5% protein and at least about 1% lipid both by weight of the flour, and at least about 50% amylose by weight of the starch in the flour.

7. The process of claim 6, wherein the flour is a com flour which comprises about 8 to 13% protein and about 2 to 3% lipid, and about 85 to 90% starch, all by weight of the flour.

8. The process of any one of claims 1-7, wherein the target temperature is between 100 and 120 °C.

9. The process of any one of claims 1-8, wherein the moisture content is between from 20 to 30% by weight of the flour.

10. The process of any one of claims 1-9, wherein the heating is carried out without the addition of water.

11. The process of any one of claims 1-10, wherein the moisture content is not controlled during heating.

12. A composition comprising the hydrothermally heated flour of any one of claims 1-11.

13. The composition of claim 12, wherein the flour has a total dietary fiber content of at least 20% by weight of the flour.

14. The composition of claim 13, wherein the flour has a total dietary fiber content of at least 40% by weight of the flour.

15. The composition of claim 14, wherein the flour has a total dietary fiber content of at least 50% by weight of the flour.

16. The composition of any one of claims 12-15, wherein the flour has a subpeak melting point temperature.

17. The composition of any one of claims 12-16, wherein the flour is a com flour having an amylose content of at least 70% by weight of the starch in the flour and a melting point temperature of at least 100°C.

18. The composition of any one of claims 12-17, wherein the flour has a change in L-value of less than 10.

**19.** The composition of claim 18, wherein the flour has a change in L-value of less than 2.

**20.** The composition of any one of claims 12-19, wherein 90% of the flour has a particle size of at least 250 microns and no greater than 590 microns.

**21.** The composition of any one of claims 12-19, wherein 90% of the flour has a particle size of at least 180 microns and no greater than 590 microns.

**22.** The composition of any one of claims 12-19, wherein the flour has a particle size of no greater than 590 microns and 70% of the flour has a particle size of at least 180 microns.

**23.** The composition of any one of claims 12-19, wherein the flour has a particle size of no greater than 590 microns and 80% of the flour has a particle size of at least 125 microns.

**24.** A method of producing a food comprising:

extruding the composition of any one of claims 12-23 using a specific mechanical energy of at least 125 Wh/kg and a product temperature of 135-145°C to form an extruded composition,
wherein the extruded composition retains at least about 50% by weight of its total dietary fiber content.

**25.** The method of claim 24, wherein the extruded composition retains at least about 60% by weight of its total dietary fiber content.

**Patentansprüche**

**1.** Verfahren zur Erhöhung des Gesamtballaststoffgehalts eines Mehls, umfassend Erwärmen des Mehls unter den Bedingungen eines Feuchtigkeitsgehalts von zwischen 10 und 50 Gewichts-% des Mehls bei einer Zieltemperatur von 80 bis 160 °C und für eine Zeit von 0,5 bis 15 Minuten bei der Zieltemperatur, um ein hydrothermal erwärmtes Mehl herzustellen;
wobei das Mehl einen Amylosegehalt von wenigstens 40 Gewichts-% oder, wenn Weizen- oder Reismehl, einen Amylosegehalt von wenigstens 27 Gewichts-% der Stärke im Mehl hat;
wobei die Bedingungen so gewählt sind, dass der Gesamtballaststoffgehalt um wenigstens 10 %, bezogen auf das Gewicht des Mehls, erhöht wird.

**2.** Verfahren gemäß Anspruch 1, wobei das Mehl ein Maismehl ist.

**3.** Verfahren gemäß Anspruch 1 oder 2, wobei das Mehl einen Amylosegehalt von wenigstens etwa 70 Gewichts-% der Stärke in dem Mehl hat.

**4.** Verfahren gemäß Anspruch 3, wobei das Mehl einen Amylosegehalt von wenigstens etwa 80 Gewichts-% der Stärke in dem Mehl hat.

**5.** Verfahren gemäß Anspruch 4, wobei das Mehl einen Amylosegehalt von wenigstens etwa 90 Gewichts-% der Stärke in dem Mehl hat.

**6.** Verfahren gemäß einem der Ansprüche 1 bis 5, wobei das Mehl wenigstens 5 % Protein und wenigstens etwa 1 % Lipid, beide als Gewichts-% des Mehls, und wenigstens etwa 50 Gewichts-% Amylose der Stärke in dem Mehl umfasst.

**7.** Verfahren gemäß Anspruch 6, wobei das Mehl ein Maismehl ist, das etwa 8 bis 13 % Protein und etwa 2 bis 3 % Lipid und etwa 85 bis 90 % Stärke, alle als Gewichts-% des Mehls, umfasst.

**8.** Verfahren gemäß einem der Ansprüche 1 bis 7, wobei die Zieltemperatur zwischen 100 und 120 °C liegt.

**9.** Verfahren gemäß einem der Ansprüche 1 bis 8, wobei der Feuchtigkeitsgehalt zwischen 20 und 30 Gewichts-% des Mehls liegt.

**10.** Verfahren gemäß einem der Ansprüche 1 bis 9, wobei das Erwärmen ohne Zusatz von Wasser durchgeführt wird.

**11.** Verfahren gemäß einem der Ansprüche 1 bis 10, wobei der Feuchtigkeitsgehalt während des Erwärmens nicht reguliert wird.

**12.** Zusammensetzung, umfassend das hydrothermal erwärmte Mehl gemäß einem der Ansprüche 1 bis 11.

**13.** Zusammensetzung gemäß Anspruch 12, wobei das Mehl einen Gesamtballaststoffgehalt von wenigstens 20 Gewichts-% des Mehls hat.

**14.** Zusammensetzung gemäß Anspruch 13, wobei das Mehl einen Gesamtballaststoffgehalt von wenigstens 40 Gewichts-% des Mehls hat.

**15.** Zusammensetzung gemäß Anspruch 14, wobei das Mehl einen Gesamtballaststoffgehalt von wenigstens 50 Gewichts-% des Mehls hat.

**16.** Zusammensetzung gemäß einem der Ansprüche 12-14, wobei das Mehl eine Subpeak-Schmelzpunkttemperatur hat.

**17.** Zusammensetzung gemäß einem der Ansprüche 12-16, wobei das Mehl ein Maismehl ist, das einen Amylosegehalt von wenigstens 70 Gewichts-% der Stärke in dem Mehl und eine Schmelzpunkttemperatur von wenigstens 100 °C hat.

**18.** Zusammensetzung gemäß einem der Ansprüche 12-17, wobei das Mehl eine Änderung beim L-Wert von weniger als 10 hat.

**19.** Zusammensetzung gemäß Anspruch 18, wobei das Mehl eine Änderung beim L-Wert von weniger als 2 hat.

**20.** Zusammensetzung gemäß einem der Ansprüche 12-19, wobei 90 % des Mehls eine Partikelgröße von wenigstens 250 $\mu$m und nicht größer als 590 $\mu$m haben.

**21.** Zusammensetzung gemäß einem der Ansprüche 12-19, wobei 90 % des Mehls eine Partikelgröße von wenigstens 180 $\mu$m und nicht größer als 590 $\mu$m haben.

**22.** Zusammensetzung gemäß einem der Ansprüche 12-19, wobei das Mehl eine Partikelgröße von nicht größer als 590 $\mu$m hat und 70 % des Mehls eine Partikelgröße von wenigstens 180 $\mu$m haben.

**23.** Zusammensetzung gemäß einem der Ansprüche 12-19, wobei das Mehl eine Partikelgröße von nicht größer als 590 $\mu$m hat und 80 % des Mehls eine Partikelgröße von wenigstens 125 $\mu$m haben.

**24.** Verfahren zur Herstellung eines Nahrungsmittels, umfassend:

Extrudieren der Zusammensetzung gemäß einem der Ansprüche 12-23 unter Verwendung einer spezifischen mechanischen Energie von wenigstens 125 Wh/kg und einer Produkttemperatur von 135-145 °C unter Bildung einer extrudierten Zusammensetzung,
wobei die extrudierte Zusammensetzung wenigstens etwa 50 Gewichts-% ihres Gesamtballaststoffgehalts beibehält.

**25.** Verfahren gemäß Anspruch 24, wobei die extrudierte Zusammensetzung wenigstens etwa 60 Gewichts-% ihres Gesamtballaststoffgehalts beibehält.

**Revendications**

**1.** Procédé pour augmenter la quantité totale de fibres alimentaires d'une farine, comprenant le chauffage de la farine dans des conditions consistant en une teneur en humidité de 10 à 50 % en poids de la farine, à une température cible de 80 à 160°C, et en un temps de 0,5 à 15 minutes à la température cible, pour produire une farine ayant subi un chauffage hydrothermique ;

dans lequel la farine a une teneur en amylose d'au moins 40 % en poids de l'amidon dans la farine ou, s'il s'agit d'amidon de blé ou de riz, une teneur en amylose d'au moins 27 % en poids de l'amidon dans la farine ;
et dans lequel les conditions sont choisies pour augmenter la quantité totale de fibres alimentaires d'au moins 10 % sur la base du poids de la farine.

2.  Procédé suivant la revendication 1, dans lequel la farine est une farine de blé.

3.  Procédé suivant la revendication 1 ou 2, dans lequel la farine a une teneur en amylose d'au moins environ 70 % en poids de l'amidon dans la farine.

4.  Procédé suivant la revendication 3, dans lequel la farine a une teneur en amylose d'au moins environ 80 % en poids de l'amidon dans la farine.

5.  Procédé suivant la revendication 4, dans lequel la farine a une teneur en amylose d'au moins environ 90 % en poids de l'amidon dans la farine.

6.  Procédé suivant l'une quelconque des revendications 1 à 5, dans lequel la farine comprend au moins 5 % de protéine et au moins environ 1 % de lipide, ces deux teneurs en poids de la farine, et au moins environ 50 % d'amylose en poids de l'amidon dans la farine.

7.  Procédé suivant la revendication 6, dans lequel la farine est une farine de blé qui comprend environ 8 à 13 % de protéine et environ 2 à 3 % de lipide, et environ 85 à 90 % d'amidon, toutes ces teneurs en poids de la farine.

8.  Procédé suivant l'une quelconque des revendications 1 à 7, dans lequel la température cible est comprise dans l'intervalle de 100 à 120°C.

9.  Procédé suivant l'une quelconque des revendications 1 à 8, dans lequel la teneur en humidité est comprise dans l'intervalle de 20 à 30 % en poids de la farine.

10. Procédé suivant l'une quelconque des revendications 1 à 9, dans lequel le chauffage est effectué sans addition d'eau.

11. Procédé suivant l'une quelconque des revendications 1 à 10, dans lequel la teneur en humidité n'est pas régulée au cours du chauffage.

12. Composition comprenant la farine ayant subi un chauffage hydrothermique de l'une quelconque des revendications 1 à 11.

13. Composition suivant la revendication 12, dans laquelle la farine a une teneur totale en fibres alimentaires d'au moins 20 % en poids de la farine.

14. Composition suivant la revendication 13, dans laquelle la farine a une teneur totale en fibres alimentaires d'au moins 40 % en poids de la farine.

15. Composition suivant la revendication 14, dans laquelle la farine a une teneur totale en fibres alimentaires d'au moins 50 % en poids de la farine.

16. Composition suivant l'une quelconque des revendications 12 à 15, dans laquelle la farine a une température de point de fusion sous-maximale.

17. Composition suivant l'une quelconque des revendications 12 à 16, dans laquelle la farine est une farine de blé ayant une teneur en amylose d'au moins 70 % en poids de l'amidon dans la farine et une température de point de fusion d'au moins 100°C.

18. Composition suivant l'une quelconque des revendications 12 à 17, dans laquelle la farine a une variation de valeur L inférieure à 10.

19. Composition suivant la revendication 18, dans laquelle la farine a une variation de valeur L inférieure à 2.

**20.** Composition suivant l'une quelconque des revendications 12 à 19, dans laquelle une proportion de 90 % de la farine a un diamètre de particules d'au moins 250 micromètres et non supérieur à 590 micromètres.

**21.** Composition suivant l'une quelconque des revendications 12 à 19, dans laquelle une proportion de 90 % de la farine a un diamètre de particules d'au moins 180 micromètres et non supérieur à 590 micromètres.

**22.** Composition suivant l'une quelconque des revendications 12 à 19, dans laquelle la farine a un diamètre de particules non supérieur à 590 micromètres et une proportion de 70 % de la farine a un diamètre de particules d'au moins 180 micromètres.

**23.** Composition suivant l'une quelconque des revendications 12 à 19, dans laquelle la farine a un diamètre de particules non supérieur à 590 micromètres et une proportion de 80 % de la farine a un diamètre de particules d'au moins 125 micromètres.

**24.** Procédé pour la production d'une denrée alimentaire, comprenant :

l'extrusion de la composition de l'une quelconque des revendications 12 à 23 en utilisant une énergie mécanique spécifique d'au moins 125 Wh/kg et une température de produit de 135 à 145°C pour former une composition extrudée,
dans lequel la composition extrudée retient au moins environ 50 % en poids de sa teneur totale en fibres alimentaires.

**25.** Procédé suivant la revendication 24, dans lequel la composition extrudée retient au moins environ 60 % en poids de sa teneur totale en fibres alimentaires.

Figure 1: Melting profiles as measured by DSC for hydro-thermally processed high amylose corn flour

Figure 2: Melting profiles as measured by DSC for hydro-thermally processed

high amylose corn flour

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1088832 A

**Non-patent literature cited in the description**

- *Journal of AOAC, Int.,* 1992, vol. 75 (3), 395-416